# DEMANDE DE BREVET EUROPEEN

(11) **EP 1 138 211 A1**
(43) Date de publication de la demande: **04.10.2001**
(21) Numéro de dépôt: 00106664.6
(22) Date de dépôt: 29.03.2000
(51) Int. Cl.: A23L 1/40, A23P 1/02, A23P 1/12, A23L 1/39

(54) **Aide culinaire**

(71) Demandeur: SOCIETE DES PRODUITS NESTLE S.A., 1800 Vevey (CH)
(72) Inventeur: Mahe Yannick, 8400 Winterthur (CH); Isler, Ernst, 8552 Felben-Wellhausen (CH); Froelich, Markus, 8051 Zurich (CH)
(74) Mandataire: Wavre, Claude-Alain

(57) **Abrégé**

Aide culinaire composé d'une enveloppe à base de matière grasse solide à température ambiante et d'une garniture aromatique fluide ou pâteuse. L'enveloppe du produit selon l'invention fond rapidement au contact d'un aliment chaud ou dans la poêle et possède une bonne résistance mécanique aux manipulations à température ambiante. L'enveloppe comprend de l'ordre de 40 à 100 % de matière grasse et de 0 à 60% d'additifs de charges du type polysaccharides, protéines, fibres ou un mélange de ceux-ci. La garniture, aqueuse et/ou grasse, du produit selon l'invention présente une viscosité qui s'inscrit dans une gamme comprise entre un miel liquide et une pâte à tartiner.

Procédé pour fabriquer un tel aide culinaire.

## Description

La présente invention concerne un aide culinaire aromatique susceptible d'être fondu ou dissout et destiné à être utilisé pour l'assaisonnement d'aliments cuits et/ou la cuisson ou la préparation de plats cuisinés. La présente invention concerne aussi un procédé de fabrication d'un tel aide culinaire.

Les aides culinaires aujourd'hui disponibles pour assaisonnement/aromatisation se présentent d'une part sous la forme de produits liquides ou fluides. Cependant, avec ce genre de produit se pose le problème du portionnement. D'autre part, il existe des produits sous forme de poudre que l'on rajoute directement dans l'assiette ou le plat. Néanmoins, ce type de produit est très hygroscopique et nécessite un emballage adapté et n'est pas non plus facilement portionnable ni conservable une fois entamé. La dissolution et la répartition de ces produits pulvérulents n'est pas toujours aisée et aboutit à la formation de grumeaux. Des aides culinaires portionnés existent sous forme de tablettes. Ces dernières sont fabriquées par compactage d'ingrédients pulvérulents/déshydratés. Celles-ci doivent être dissoutes dans un liquide et cette étape de dissolution est parfois longue et peu aisée. Certaines de ces tablettes de bouillon sont destinées à être dissoutes dans l'eau de cuisson de riz, de pâtes et/ou de légumes. Une fois cuits les produits sont égouttés et la quasi-totalité des arômes dissouts dans l'eau de cuisson sont perdus. Certains aides culinaires du type tablettes peuvent aussi être destinés à la cuisson à la poêle. Cependant, ces tablettes présentent une fusion médiocre et nécessitent d'être écrasées. Malgré cela la dispersion de l'assaisonnement est loin d'être optimal et on observe souvent des morceaux ou des grumeaux résiduels, ce qui est particulièrement désagréable lors de la consommation. De plus les tablettes sont fabriquées à partir d'ingrédients déshydratés et il est bien connu que les opérations de concentration/déshydratation sont néfastes aux qualités organoleptiques des produits obtenus, plus particulièrement sur le plan aromatique. En effet, les intensité, richesse et force aromatiques du produit déshydraté/concentré sont loin d'égaler le produit initial ou un produit fluide moins concentré.

Les beurres aromatisés permettent de pallier certains de ces problèmes mais leur durée de conservation est limitée et ils doivent être conservés réfrigérés. D'autre part ce type de produit très gras ne constitue un vecteur d'arôme intéressant que pour les arômes lipophiles.

Diverses formes de produits de type capsules aromatiques existent, elles sont en général constituées d'une pellicule externe à base de gélatine ou d'alginate ou d'un autre polymère gélifiant, ce qui nécessite un chauffage prolongé en. milieu aqueux pour assurer la dissolution et/ou la rupture de cette enveloppe et la libération du contenu.

Les procédés pour fabriquer de telles capsules mettent à profit les propriétés de coagulation de ces polymères et les forces de tension superficielles. Ces capsules sont ainsi réalisées via la formation de billes ou de gouttes dans une solution de gélification (cas des alginates) ou de refroidissement (cas de la gélatine). Cependant, ce principe a ses limites et la taille des billes formées est limitée. Dans d'autres cas, il s'agit dans un premier temps de former une capsule vide par moulage de deux moitiés, réunion de celles-ci et remplissage de la capsule formée.

JP 10075720 décrit un produit alimentaire composé d'une phase grasse et d'une phase amylacée. La phase grasse renferme des capsules dispersées constituées d'une enveloppe hydrosoluble contenant un ingrédient aromatique. Lorsque ce produit est dispersé et chauffé dans une phase aqueuse bouillante, l'enveloppe hydro-soluble se dissout et libère l'ingrédient aromatique. Un tel produit est destiné à la fabrication de roux par ajout d'eau bouillante.

Divers brevets décrivent des capsules renfermant une composition aromatique sous forme de poudre, pâte, liquide aqueux, liquide huileux ou émulsion. Dans tous ces cas le matériau d'encapsulation est une gélatine, un alginate, un dérivé de ces derniers ou tout autre polymère gélifiant ou co-gélifiant hydrosoluble : JP 10014554 ; JP 09313154 ; DE 29713074 ; JP 09163963 ; WO 9505751 ; EP 525731 ; JP 02079941.

D'autre part JP 08010313 décrit un produit du type capsule renfermant une garniture liquide. Cette capsule est sous forme d'un gouttelette multicouches (3 couches) dans laquelle le coeur est séparé de l'enveloppe par une couche lipophile.

JP 01232963 décrit une capsule souple multicouches réalisée par laminage-moulage. Le matériau de la capsule est choisi de manière à présenter une résistance élevée aux hautes températures, aux acides, aux bases, et à l'eau. Un tel produit est destiné à une longue préservation de la garniture à l'égard d'agents extérieurs.

Le but de la présente invention est de proposer un aide culinaire solide à température ambiante qui se dissout rapidement dans un liquide bouillant ou qui fond rapidement au contact d'un aliment chaud ou de la surface d'une poêle chaude.

A cet effet, l'aide culinaire selon la présente invention est composé d'une enveloppe à base de matière grasse solide à température ambiante et d'une garniture aromatique fluide ou pâteuse.

Le produit présente ainsi une bonne résistance mécanique aux manipulations à température ambiante et fond rapidement au contact d'un aliment ou d'un ustensile de cuisine chaud, ce qui permet une dissolution et une dispersion rapide de la garniture. Aussi, surtout dans le cas de l'assaisonnement de pâtes, riz ou légumes cuits, l'enrobage gras fond rapidement pour libérer la garniture fluide qui se répartit rapidement au sein du plat garni. La proportion du poids de l'enveloppe dans le produit peut être choisie de manière à donner au produit une résistance mécanique suffisante pour assurer un démoulage ainsi qu'une manipulation aisés. Le poids de l'enveloppe peut se situer dans une fourchette de l'ordre de 30 à 90 % du produit final, par exemple. De même, la matière grasse peut présenter un point de fusion compris entre 30 et 60°C.

Dans le cas d'une utilisation du produit selon l'invention en mode cuisson, ses propriétés permettent d'avoir une répartition instantanée et uniforme de la matière grasse et des ingrédients aromatiques dans la poêle en évitant la persistance de grumeaux et de résidus grossiers. De plus, une garniture fluide permet d'apporter des notes aromatiques nouvelles et différentes et de bien meilleure qualité par rapport aux tablettes. Le profil aromatique est plus riche et mieux équilibré entre les notes de tête et les notes de queue. Ainsi suivant le support des ingrédients aromatiques (aqueux ou gras ou les deux), pourra-t-on apporter un éventail d'arômes varié, de nature hydrophiles ou lipophiles. Le profil aromatique sera de toute façon de bien meilleure qualité principalement grâce à la préservation de ces notes aromatiques de tête puisque la garniture ne subit pas de déshydratation.

L'enveloppe du produit selon l'invention devrait présenter ainsi les propriétés suivantes : une résistance mécanique aux manipulations à température ambiante et une fusion rapide dans un aliment chaud ou au contact de la poêle chaude. De la sorte, la formulation spécifique de cette enveloppe a permis, via la sélection des matières grasses mises en oeuvre ainsi que d'additifs de charge, de résoudre ces problèmes. La quantité de matière grasse contenue dans l'enveloppe peut être de l'ordre de 40 à 100 % environ. Les additifs de charge, jusqu'à 60% environ du poids de l'enveloppe, peuvent être de nature polysaccharidique et/ou protéique et/ou des fibres et/ou du sel. Il peut s'agir d'amidon natif, d'amidon modifié chimiquement et/ou physiquement, de maltodextrine, de sirop de glucose ou un mélange de ceux-ci, par exemple. Les polysaccharides ajoutés à la matière grasse constitutive de l'enveloppe peuvent être remplacés en totalité ou en partie par des dérivés protéiques du type caséinates et/ou protéines de lactosérum, par exemple. Des fibres alimentaires du type cellulose, methylcellulose, fibres de blé, par exemple, peuvent aussi faire partie de ces additifs de charge du matériau de l'enveloppe. De tels additifs permettent d'augmenter la viscosité du matériau de l'enveloppe. Ceci est intéressant dans le cas où la proportion de poids de l'enveloppe par rapport à la garniture dans le produit final est faible.

La matière grasse peut être de préférence une graisse végétale hydrogénée ou fractionnée comme de l'huile de palme hydrogénée, par exemple. Les graisses animales ne sont utilisables que si elles sont hydrogénées. Le corps gras, ou le mélange de corps gras utilisé pour la réalisation de l'enveloppe de la présente invention, peut présenter un point de fusion compris de préférence entre 40 et 55°C environ. La viscosité du mélange du matériau de l'enveloppe peut être de l'ordre de 4 à 18 Pa.s, aux environs de 10s⁻¹ et de 40°C.

L'enveloppe du produit selon l'invention peut en outre comprendre des extraits végétaux, des particules, des épices telles que curry, poivre, paprika, par exemple, des colorants, des arômes et/ou des éléments visuels tels que des flocons de persil, ail, basilic, oignon, par exemple et/ou des vitamines telle que de la riboflavine par exemple. D'autre part, l'enveloppe du produit selon l'invention peut être recouverte partiellement ou entièrement de flocons de légumes déshydratés ou de semoule, par exemple.

La Courbe SFC (Solid Fat Content) d'un corps gras définit la fraction de matière grasse présente à l'état solide dans le corps gras en fonction de la température sur une gamme de température donnée, en général 0° - 60°C environ pour les corps gras alimentaires. Dans le présent cas, la matière grasse mise en oeuvre devrait présenter un taux de solides élevé aux alentours de la température ambiante. De plus la courbe SFC devrait diminuer rapidement au delà de 40°C environ de manière à assurer un fonte rapide lors du contact avec des aliments chauds pour consommation. Cette courbe SFC présente ainsi avantageusement une allure biphasique avec une pente faible. entre 0°C et la température ambiante (20 à 30°C environ) et une pente très forte au delà de 35° à 45°C environ.

Ces propriétés permettent ainsi une fusion rapide de l'enveloppe lorsque le produit est ajouté à une portion de riz, de pâtes ou de légumes chauds juste avant consommation, tout en assurant une bonne résistance mécanique à température ambiante.

La masse unitaire d'un produit selon l'invention peut être d'environ 10-15g, ce qui permet l'assaisonnement d'une portion d'environ 200-300g d'aliment cuits. La quantité d'unités de produit selon l'invention à ajouter pourra être ajustée en fonction de la quantité d'aliments à assaisonner.

Cette propriété de fusion rapide de l'enveloppe du produit selon l'invention permet aussi son application en tant qu'aide culinaire dans la préparation de plats et mets cuisinés. On peut ainsi, par exemple, ajouter le produit selon l'invention dans une poêle chaude. L'enveloppe fond aussitôt, la garniture fluide ou pâteuse est libérée et se répand ou fond rapidement dans la poêle. On peut, dès lors, rajouter viande, poisson, légumes et/ou riz par exemple, pour effectuer la cuisson avec ou sans ajout de liquide, par exemple. De manière analogue, on peut ajouter le produit selon l'invention quelques minutes avant la fin de la cuisson de légumes, viandes, poisson, riz, plats cuisinés, plats en sauce, par exemple.

L'enveloppe du produit selon l'invention peut aussi contenir en outre du fromage fondu dans l'optique d'une utilisation pour le gratinage au four, par exemple.

La proportion en poids garniture/enveloppe dans le produit final peut se situer dans une gamme très large de 70/30 à 10/90, environ, de préférence 50/50. La valeur de cette proportion est dépendante de la taille; de la forme du produit (sphère, parallélépipède, portion de cylindre, barre, coeur, cône, cône tronqué, ou tout autre forme moulée, par exemple) ainsi que de la viscosité de la garniture. L'épaisseur de l'enveloppe sera fonction des viscosités de la garniture et de la matière constitutive de l'enveloppe, de la forme, de la taille et de la proportion en poids garniture/enveloppe dans le produit selon l'invention. A titre indicatif, l'épaisseur de cette enveloppe peut se situer aux environs de 1,5 à 4,0 mm pour un produit sphérique de 10-15 grammes, par exemple. Plus fine sera l'enveloppe, plus rapide sera sa fusion et plus rapide sera la dispersion de la garniture.

La garniture du produit selon l'invention est un produit aromatique fluide ou pâteux, dont la viscosité peut correspondre à une gamme comprise entre un miel liquide et une pâte à tartiner. Il est avantageux d'utiliser un produit particulièrement fluide pour toutes les raisons explicitées précédemment : dispersion rapide, profil aromatique plus complexe et de meilleure qualité. Cependant la garniture peut être un produit pâteux pompable. La garniture du produit selon l'invention peut être à base d'eau, à base de matières grasses ou une émulsion. Cette garniture peut être un bouillon concentré de viande et/ou de légumes du type bouillon de poule ou pot au feu, par exemple. La garniture peut être réalisée selon le mode de fabrication d'un arôme de réaction. Un tel arôme est traditionnellement fabriqué par chauffage d'un mélange comprenant des dérivés protéiques ou aminés avec des sucres réducteurs. En fonction du couple température-durée du traitement appliqué, on obtient des profils aromatiques différents.

Le bouillon plus ou moins concentré peut être additionné ou remplacé par une préparation grasse à base d'huile d'olive, d'huile de beurre, de tournesol, de palme, plus ou moins hydrogénées, par exemple. Cette préparation grasse ainsi que le bouillon peuvent être agrémentés et/ou aromatisés par ajout d'arômes, d'épices et d'aromates tels que basilic, persil, ail, oignon, curry, gingembre, thym, fines herbes, piment, coriandre, de particules alimentaires végétales et/ou animales ou du fromage par exemple.

Dans le cas d'une utilisation du produit selon l'invention dans des plats cuisinés du type légumes et/ou viandes sautés ou en sauce, la garniture pourra contenir un ou des ingrédients épaississants de type amidons natifs et/ou modifiés, farine de guar, alginates ou maltodextrines, seuls ou en mélanges, par exemple. Ainsi, lors de la fusion de l'enveloppe, la garniture peut servir non seulement d'assaisonnement mais aussi de liant avec ajout éventuel de liquides tels que vin, eau, vinaigre, crème ou lait, par exemple.

Le produit selon l'invention peut être dissout dans un liquide chaud en vue de la reconstitution instantanée d'une boisson chaude, d'un bouillon ou d'un potage. Le produit selon l'invention présente l'avantage d'être facilement portionnable, instantanément dissout sans grumeaux avec un effort mécanique minimum dans un liquide chaud et présente aussi des caractéristiques organoleptiques optimales.

De manière proche, le produit selon l'invention peut être fondu/dissout dans un fond de poêle après cuisson de légumes et/ou de viande ou dans une quantité plus ou moins importante de liquide chaud ou froid, ceci pour réaliser un glaçage ou une sauce, par exemple.

La conservation du produit à température ambiante pourra être assurée via la teneur en sel de la garniture qui peut être de l'ordre de 10 à 40 % et de préférence de 20 à 30 %. Le sel présent dans la garniture éventuellement associé à d'autres agents dépresseurs de l'activité de l'eau (humectants) tels que des polysaccharides, sirops de glucose, par exemple, contribue à réduire l'activité de l'eau du produit (Aw) qui peut se situer de préférence dans une fourchette de l'ordre de 0,2 à 0,8. Dans le cas ou la garniture présente une Aw supérieure à 0,8, on pourra envisager l'utilisation d'agents conservateurs chimiques, tels que des sulfites par exemple, pour améliorer la conservation du produit.

La présente invention a également pour but de proposer un procédé de fabrication d'un tel aide culinaire.

A cet effet, un procédé de fabrication du produit selon l'invention consiste à co-extruder matériau de l'enveloppe et garniture fluide ou pâteuse dans un moule de manière à emprisonner la garniture dans le matériau de l'enveloppe.

Dans un mode de réalisation préféré du présent procédé, on peut :
- chauffer le matériau de l'enveloppe de manière à disposer d'un produit pompable dont la viscosité est supérieure ou égale à la viscosité de la garniture et
- réaliser une co-extrusion de la garniture et du matériau de l'enveloppe dans un moule de manière à envelopper la garniture dans le matériau d'enveloppe.

L'ensemble une fois moulé-formé grâce à la co-extrusion dans un moule peut être refroidi rapidement ou laissé à température ambiante, aux environs de 18-24 °C, jusqu'à raffermissement de l'enveloppe.

La garniture peut être réalisée directement dans un mélangeur par addition de pulvérulents et de liquides. La température de dosage du mélange peut être comprise entre 10 et 40°C environ selon la viscosité de ce mélange, de fluide à pâteux. La garniture peut ainsi être chauffée de manière a assurer sa pompabilité.

Parallèlement, on fabrique le matériau de l'enveloppe du produit selon l'invention. On peut ainsi mélanger la ou les matières grasses aux alentours de 50 à 60°C, dans un mélangeur à ruban thermostaté par exemple. On peut éventuellement additionner des polysaccharides et/ou des matières protéiques et/ou des fibres et refroidir le mélange jusqu'à une température de l'ordre de 25°C à 40 °C environ de manière à obtenir un produit pompable, malléable et moulable.

Les deux mélanges, garniture fluide ou pâteuse d'un côté et matériau d'enveloppe de l'autre peuvent être coextrudés dans un moule de manière à envelopper la garniture dans le matériau d'enveloppe. La garniture peut être extrudée par une buse centrale de co-extrusion, le mélange gras pour l'enveloppe par une buse périphérique. L'orifice d'injection du moule peut ensuite être obturé par scellage d'un film, par exemple. L'ensemble peut ensuite être laissé tel quel pour refroidissement à température ambiante (18 à 24 °C environ) ou soumis à un refroidissement forcé, de manière à durcir rapidement le matériau de l'enveloppe. Ce refroidissement peut être réalisé par passage du produit moulé dans un tunnel de refroidissement aux environs de 2 à 10°C, par exemple, ou par tout autre moyen capable d'assurer la cristallisation rapide des matières grasses et la solidification de l'enveloppe.

De manière avantageuse on pourra prévoir une étape d'élimination de bulles éventuelles par application de vibrations entre l'étape de co-extrusion-moulage et l'éventuelle étape de scellage.

Les moules utilisés peuvent être des moules métalliques ou en matière plastique, par exemple. Dans le cas de l'utilisation de moules réutilisables métalliques, les produits peuvent être démoulés après l'étape de refroidissement et emballés en étuis, blisters ou boîtes, par exemple ou tout autre emballage capable de protéger le produit. Un blister est un emballage constitué d'une ou plusieurs coques de plastique, éventuellement obturées, collées sur un support cartonné ou plastique. Un tel emballage est destiné à présenter et à protéger les marchandises de petite taille. Les moules non recyclables peuvent servir d'emballage primaire, le produit se présente alors dans un emballage type blister scellé. Le blister peut ensuite être placé dans un étui pour améliorer la protection du produit et permettre l'inscription d'informations relatives au produit. Dans cette forme de réalisation, le consommateur pourra ouvrir le blister au moment de la mise en oeuvre du produit selon l'invention.

Les moules utilisés pour le formage du produit selon l'invention peuvent avoir tout type de forme : sphère, cube, parallélépipède, cône, coeur, barre, animaux et personnages divers, par exemple. Les dimensions et proportions du produit selon l'invention seront fonction de la puissance aromatique et/ou de l'effet liant requis. Le volume du produit selon l'invention pourra être compris dans une fourchette de l'ordre de 8 à 25 cm³, par exemple. Théoriquement, il n'y a pas de limites concernant les dimensions du produit selon l'invention. Les produits selon l'invention peuvent se conserver à température ambiante sur des périodes allant jusqu'à 12 voire 18 mois.

Les exemples suivants permettent d'illustrer quelques variantes du produit et différents modes d'utilisation du produit selon l'invention.

### EXEMPLE 1

### Bouillon de poule

*Réalisation du matériau de l'enveloppe :* On prépare un matériau constitutif de l'enveloppe présentant la composition suivante :
- Huile de palme partiellement hydrogénée/fractionnée 1,5 kg
- Persil (flocons) haché, 2 g
- Vitamine B2, 0,5 g
- Poudre de paprika 1,7 g
- Maltodextrine 560 g

Pour préparer ce matériau la graisse est chauffée à 55-60°C et introduite dans un mélangeur à rubans à double enveloppe. Les autres ingrédients sont ensuite ajoutés et mélangés.

Le mélange est ensuite refroidi dans le mélangeur par l'intermédiaire de la double enveloppe dont la température est fixée à 30°C. A l'issue de cette étape, le mélange est facilement pompable et maléable et présente une texture relativement visqueuse. Sa température est alors de 30°C environ. Il est ensuite transféré jusqu'à un tank tampon maintenu à la même température.

*Réalisation de la garniture :* La garniture consiste en un arôme de réaction préparé comme suit. Les ingrédients suivants sont mélangés dans un réacteur et portés 90 min à 98°C :
- Sel, 750 g
- Eau, 1,250 kg
- Sucre cristallisé, 315 g
- Maltodextrine, 316 g
- Viande de poulet en poudre, 72 g
- Extrait de levure en poudre, 72 g
- Inosinate de sodium 21 g
- Arôme oignon frit, 16 g
- L-cystéine, 12 g
- Curcuma, 16 g
- Romarin, 3.15 g
- Diammonium phosphate, 7 g
- Poivre, 3 g
- Arôme poulet, 3,5 g
- Fécule de manioc 87 g
- Alginate Keltrol 5.5 g

Après réaction le mélange est refroidi à température ambiante. La préparation de ce mélange peut être effectuée à l'avance. Le mélange peut être dosé à température ambiante. Il est transféré dans un tank tampon non chauffé.

Les mélanges sont transférés vers les trémies correspondantes d'une doseuse Awema UDM 202/96 (AWEMA AG, ZURICH) via des pompes thermostatées. Ces trémies sont également maintenues en température de façon à garder une viscosité constante, soit 30°C pour le matériau d'enveloppe et 25°C pour la garniture.

Les mélanges sont directement injectés et dosés par co-extrusion via des doubles buses de dosage (diamètre de la buse interne 7,6 mm, diamètre de la buse externe 9 mm) dans des moules comportant 20 à 120 alvéoles de forme parallélépipédique en P.E.T. (Poly Ethylène Terephtalate). Les pistons dosant les produits distribuent garniture et matériau d'enveloppe dans une proportion de 50/50. La masse totale délivrée est d'environ 12 g. Un film est ensuite scellé sur les moules par chauffage.

Les moules sont ensuite coupés de façon à avoir des plaques de 4 à 10 alvéoles.

Le produit est ensuite refroidi dans un tunnel de refroidissement à 5°C, pendant environ 10 minutes, de manière à assurer la solidification rapide du matériau de l'enveloppe.

Les plaques de 4 à 10 alvéoles sont ensuite emballées dans des étuis cartons.

*Utilisation* : L'aide culinaire ainsi obtenu peut servir à la reconstitution d'un bouillon de poule. Un cube ainsi obtenu du produit selon l'invention est additionné à 200 g d'eau bouillante. L'enveloppe fond rapidement et libère la garniture fluide qui se dilue dans l'eau chaude aisément. On obtient ainsi facilement et rapidement un bouillon de poule présentant les caractéristiques aromatiques d'un bouillon fraîchement préparé.

### EXEMPLE 2

### Assaisonnement "al pesto" pour pâtes

Le mode de réalisation du produit selon l'invention est identique à celui décrit à l'exemple 1 sauf en ce qui concerne les ingrédients, la préparation du mélange correspondant à la garniture et la proportion enveloppe/garniture dans le produit final qui est dans ce cas de 42/58.

Les ingrédients suivants sont utilisées pour la fabrication du matériau de l'enveloppe :
- Huile de palme partiellement
   hydrogénée/fractionnée 750 g
- Huile de palme partiellemenent
   hydrogénée, 740 g
- Maltodextrine, 520 g
- Epinard en poudre, 52 g
- Persil flocons, 21 g

Ingrédients de la garniture :
- Fromage en poudre, 233 g
- Sel, 990 g
- Persil, 90 g
- Basilic, 58 g
- Poudre d'ail, 116 g
- Arôme fromage, 88 g
- Oignon en poudre, 58 g
- Epinard en poudre, 58 g
- Arôme basilic, 26 g
- Huile de beurre, 6.20 g
- Huile d'olive, 585 g

Le mélange correspondant à la garniture est préparé dans un mélangeur à rubans, la matière grasse est introduite à 55°C environ, les autres ingrédients étant à température ambiante. Le mélange homogénéisé est ensuite refroidi jusqu'à une température d'environ 30°C.
Ici le produit est co-extrudé de manière identique à ce qui est expliqué dans l'exemple 1 dans des alvéoles en forme de tronçon de cylindre.

*Utilisation* : L'aide culinaire ainsi préparé peut être utilisé pour assaisonner et aromatiser des pâtes. Des pâtes, type tagliatelles, sont cuites dans l'eau bouillante non salée, de façon traditionnelle. Une fois cuites, les pâtes sont égouttées, transvasées dans un plat ou une assiette. On ajoute l'aide culinaire selon l'invention aux pâtes chaudes à raison d'un article (environ 12 g) pour 220 g de pâtes. Au contact des pâtes chaudes, l'enveloppe du produit ainsi que la garniture grasse fondent au sein du plat. Un simple brassage permet de répartir facilement et rapidement l'assaisonnement au sein des pâtes cuites.

### EXEMPLE 3

### Cube pour préparation à frire thym/citron

Le mode de réalisation du produit selon l'invention est identique à celui décrit à l'exemple 1 sauf en ce qui concerne les ingrédients. Ici le produit est co-extrudé dans des alvéoles en forme de parallélépipède.

Ingrédients de la garniture :
- Sel, 495 g
- Arôme oignons frits, 75 g
- Thym en poudre, 17,5 g
- Citron-lime, 17,5 g
- Poudre de paprika, 7,5 g
- Laurier en poudre, 5 g
- Poivre, 2,5 g
- Huile de beurre, 1,9 kg

Ingrédients de l'enveloppe :
- Huile de palme partiellement
   hydrogénée/fractionnée 937 g
- Huile de palme partiellement
   hydrogénée (45-46 °C, point de fusion), 937 g
- Amidon de maïs, 600 g
- Curry en poudre, 12,5 g
- Paprika doux, 12,5 g

*Utilisation* : Un aide culinaire (env. 12 g) ainsi obtenu est jeté dans une poêle chaude, l'enveloppe fond immédiatement et libère ainsi la garniture aromatique grasse qui fond à son tour. Environ 150 g de poulet émincé sont ajoutés et frits ainsi dans le mélange jusqu'à cuisson de la viande.

## Revendications

1. Aide culinaire composé d'une enveloppe à base de matière grasse solide à température ambiante et d'une garniture aromatique fluide ou pâteuse.

2. Aide culinaire selon la revendication 1 **caractérisé en ce que** l'enveloppe présente un taux de matière grasse compris entre 40 et 100 %, de préférence entre 60 et 80 %, et comprend jusqu'à 60 % de polysaccharides et/ou de protéines et/ou de fibres et/ou de sel.

3. Aide culinaire selon l'une des revendications 1 et 2 **caractérisé en ce que** la matière grasse de l'enveloppe présente une plage de fusion comprise entre 30 et 60 °C.

4. Aide culinaire selon l'une des revendications 1 et 2 **caractérisé en ce que** la proportion garniture/enveloppe par rapport au produit final est comprise dans une gamme de 70/30 à 10/90.

5. Aide culinaire selon l'une des revendications 1 et 2 **caractérisé en ce que** la garniture est une garniture à base aqueuse et/ou grasse.

6. Aide culinaire selon l'une des revendications 1 et 2 **caractérisé en ce que** la garniture contient des particules alimentaires et/ou des agents épaississants.

7. Aide culinaire selon l'une des revendications 1 et 2 **caractérisé en ce que** des particules alimentaires sont incluses dans et/ou recouvrent l'enveloppe.

8. Aide culinaire selon l'une des revendications 1 et 2 **caractérisé en ce que** la garniture comprend du sel dans une proportion de 10 à 40 % du poids de la garniture.

9. Aide culinaire selon l'une des revendications 1 et 2 **caractérisé en ce que** l'activité de l'eau de la garniture est comprise entre 0,2 et 0,8.

10. Procédé de fabrication d'un produit selon les revendications 1 et 2 comprenant les étapes suivantes :
- chauffer le matériau de l'enveloppe de manière à disposer d'un produit pompable dont la viscosité est supérieure ou égale à la viscosité de la garniture et
- réaliser une co-extrusion de la garniture et du matériau de l'enveloppe dans un moule de manière à envelopper la garniture dans le matériau d'enveloppe.

11. Procédé selon la revendication 11 **caractérisé en ce que** le matériau de la garniture est chauffé.

12. Procédé selon l'une des revendications 11 et 12 **caractérisé en ce que** le produit moulé est soumis à un refroidissement forcé.
